# EUROPEAN PATENT APPLICATION

(11) **EP 4 467 713 A2**
(43) Date of publication of application: **27.11.2024**
(21) Application number: 23186666.6
(22) Date of filing: 20.07.2023
(51) Int. Cl.: D06N 3/00, B32B 27/30

(54) **COMPOSITE STRUCTURE CONTAINING A PVC TEXTILE LAYER AND A PVC COVER LAYER**

(30) Priority: 06.04.2023 PT 2023118596
(71) Applicant: TMG - Tecidos Plastificados e Outros Revestimentos para a Indústria Automóvel, S.A., 4770-583 São Cosme do Vale (PT)
(72) Inventor: ROQUE MARCENEIRO, Sofia Daniela, 4770-583 SÃO COSME VALE (PT); DA CRUZ SIMÕES FARELEIRO, Teresa Braga, 4770-583 SÃO COSME VALE (PT)
(74) Representative: Strehl Schübel-Hopf & Partner

(57) **Abstract**

A composite structure containing a textile layer and a cover layer directly bonded to the textile layer, wherein the textile layer and the cover layer contain polyvinyl chloride; a sewn product containing the composite structure; and the use of the composite structure and sewn product as a surface material in the interior of a vehicle.

## Description

### Field of the invention

The present invention relates to a composite structure containing a polyvinyl chloride (PVC) textile layer coated with a PVC cover layer, a method of preparing the composite structure and the use of the composite structure, e.g., as a surface material in the interior of a vehicle.

### Background art

EP 3 533 601 A1 discloses a composite structure comprising a textile layer of polymers such as polyester and a thermoplastic cover layer containing PVC. The composite structure shows good tearing properties and haptics and is improved in terms of wrinkle formation and handling during processing, especially during sewing.

### Problem to be solved by the invention

The prior art does not disclose a composite structure containing a textile layer and a cover layer and made of PVC monomaterial. The problem underlying the present invention was to provide a composite structure showing desired properties such as flexibility and cut & sew properties on the one hand and easy recyclability on the other hand.

### Summary of the invention

The present invention is defined in the appended claims and covers the following aspects.
[1] A composite structure containing a textile layer and a cover layer directly bonded to the textile layer, wherein the textile layer and the cover layer contain polyvinyl chloride.
   [1-1] The composite structure according to aspect [1], wherein the composite structure can be folded to form a double-layer structure, in which two A-sides or B-sides of the composite structure are layered on each other and contact each other at the folding edge, and the double-layer structure can be unfolded to its original state.
   [1-2] The composite structure according to aspect [1-1], wherein the composite structure shows no visible damage or change at the folding edge after folding and unfolding.
   [1-3] The composite structure according to any of the preceding aspects, wherein the composite structure is suitable for preparing a sewn product obtainable by sewing the composite structure.
   [1-4] The composite structure according to any of the preceding aspects, wherein the composite structure is suitable for preparing a sewn product obtainable by sewing at least two parts of the composite structure, wherein the two parts belong to the same composite structure or to different composite structures; and the sewn product is preferably obtainable by folding the composite structure, placing the B-side surfaces of two parts of the composite structure together to provide a contact area, and sewing the composite structure in the contact area.
   [1-5] The composite structure according to any of the preceding aspects, wherein the composite structure shows no damages and no changes after 100,000 flexing cycles in a test according to DIN 53 351.
   [1-6] The composite structure according to any of the preceding aspects, wherein the PVC of the textile layer and/or the cover layer contains a plasticizer.
   [1-7] The composite structure according to any of the preceding aspects, wherein the textile layer is thicker than the cover layer or the cover layer is thicker than the textile layer.
   [1-8] The composite structure according to any of the preceding aspects, wherein the cover layer composition has a Shore A hardness according to DIN 53505 of less than 90, preferably less than 70, even more preferably less than 50.
   [1-9] The composite structure according to any of the preceding aspects, wherein the composite structure has a Shore A hardness according to DIN 53505 of 20 to 65.
   [1-10] The composite structure according to any of the preceding aspects, wherein the composite structure has a stitch tear-out force of at least 40 N according to DIN EN ISO 23910.
   [1-11] The composite structure according to any of the preceding aspects, wherein the composite structure has a tear propagation force according to DIN EN ISO 4674-1 of 10 to 95 N in a first direction and a second direction perpendicular to the first direction.
   [1-12] The composite structure according to any of the preceding aspects, wherein the structure consisting of the textile layer and the cover layer has a density of less than 1000 kg/m³, preferably less than 700 kg/m³.
[2] The composite structure according to aspect [1], wherein the textile layer contains fibers containing or consisting of polyvinyl chloride.
[3] The composite structure according to any of the preceding aspects, wherein the textile layer contains coated fibers, wherein the coating of the fibers contains or consists of polyvinyl chloride.
   [3-1] The composite structure according to aspect [3], wherein the fibers contain or consist of one or more kinds of fibers selected from the group consisting of polyvinyl chloride, polyester, polypropylene, polyamide, cotton or other natural fibers.
[4] The composite structure according to any of the preceding aspects, wherein the content of polymers other than polyvinyl chloride in the textile layer is less than 10 parts by mass based on the total content of polymers of 100 parts by mass in the textile layer, and wherein the content of polymers other than polyvinyl chloride in the cover layer is less than 10 parts by mass based on the total content of polymers of 100 parts by mass in the cover layer.
   [4-1] The composite structure according to aspect [4], wherein the content of polymers other than polyvinyl chloride in the textile layer is less than 1 part by mass based on the total content of polymers of 100 parts by mass in the textile layer, and wherein and the content of polymers other than polyvinyl chloride in the cover layer is less than 1 part by mass based on the total content of polymers of 100 parts by mass in the cover layer.
   [4-2] The composite structure according to any of the preceding aspects, wherein the content of PVC in the textile layer is at least 50 %, and wherein the content of PVC in the cover layer is at least 50 %.
[5] The composite structure according to any of the preceding aspects, wherein the textile layer has a thickness of 0.1 to 3.0 mm, and the cover layer has a thickness of 0.05 mm to 2.0 mm.
   [5-1] The composite structure according to any of the preceding aspects, wherein the total thickness of the structure consisting of the textile layer and the cover layer is 0.15 to 5.0 mm, preferably 0.2 to 3.0 mm.
   [5-2] The composite structure according to aspect [5] or [5-1], wherein the cover layer is coated with a lacquer layer having a thickness of less than 30 µm.
[6] The composite structure according to any of the preceding aspects, wherein the cover layer contains or consists of a compact layer directly bonded to the textile layer, or wherein the cover layer contains or consists of a foam layer directly bonded to the textile layer.
   [6-1] The composite structure according to aspect [6], wherein the cover layer consists of a foam layer and a compact layer and optionally an adhesive layer therebetween, wherein either the foam layer or the compact layer is directly bonded to the textile layer.
[7] The composite structure according to aspect [6], wherein the cover layer contains at least two sublayers.
[8] The composite structure according to any of the preceding aspects, wherein the adhesion strength of the textile layer to the cover layer is at least 20 N in a measurement according to ISO 2411.
[9] The composite structure according to aspect [7] or [8], wherein the textile layer has a thickness of 0.1 to 3.0 mm and the cover layer has a thickness of 0.1 mm to 2.0 mm.
   [9-1] The composite structure according to any of aspects [7] to [9], wherein the textile layer has a thickness of 0.1 to 2.0 mm and the cover layer has a thickness of 0.1 mm to 1.0 mm.
   [9-2] The composite structure according to any of aspects [7] to [9-1], wherein the textile layer has a thickness of 0.1 to 2.0 mm and the cover layer has a thickness of 0.2 mm to 1.0 mm, , wherein the textile layer is thicker than the cover layer.
[10] The composite structure according to any of the preceding aspects, wherein the composite structure is an artificial leather.
[11] A method of preparing a composite structure as described in any of aspects [1] to [10], comprising thermally or thermo-mechanically bonding the cover layer and the textile layer.
[12] A sewn product obtainable by sewing the composite structure according to any of aspects [1] to [10].
[13] A method of preparing a sewn product comprising sewing a composite structure according to any of aspects [1] to [9].
   [13-1] The method according to aspect [13], comprising sewing at least two parts of the composite structure, wherein the two parts belong to the same composite structure or to different composite structures.
   [13-2] The method according to aspect [13] or [13-1], comprising folding the composite structure, placing the A-side or B-side surfaces of two parts of the composite structure together to provide a contact area, and sewing the composite structure in the contact area.
[14] The composite structure according to any of aspects [1] to [10] or the sewn product according to aspect [12], which is a surface material in the interior of a vehicle.
[15] The use of a composite structure according to any of aspect [1] to [10] or a sewn product according to aspect [12] as a surface material in the interior of a vehicle.

### Advantages of the invention

The composite structure combines the advantageous properties of a conventional composite structure containing a textile layer and a cover layer and the advantageous properties of a monomaterial, i.e., a material selected from the same compound family. The advantageous property of a textile material is its softness, low weight, and reinforcing effect on the composite structure. The softness can be achieved without the use of a foam layer. The advantageous property of a monomaterial is its easy recyclability and contribution to circular economy by the possibility to incorporate the recycled residues again in a PVC composite structure. Another advantage of PVC-based layers are relatively low melting temperatures allowing for relatively easy separation of the layers at a low temperature. Thus, the composite structure provides a desired balance of, on the one hand, a facilitated recyclability and, on the other hand, properties in terms of softness and flexibility to achieve good haptics and handling during processing such as cutting and sewing.

### Embodiments of the invention

The composite structure of the present invention contains or consists of the textile layer and the cover layer described herein, wherein the textile layer and the cover layer contain polyvinyl chloride (herein sometimes abbreviated as PVC). The cover layer is directly bonded to the textile layer, in other words, it is directly layered on the textile layer.

The textile layer is arranged at the B-side and the cover layer is arranged at the A-side of the composite structure. Herein, the terms "A-side" and "B-side" either refer to the composite structure as a whole or to an individual layer, and the terms "above" and "below" the composite structure or a layer denote a position at the A-side and the B-side, respectively, of the composite structure or layer. The textile layer and the cover layer are directly bonded to each other and may interpenetrate each other. The other layers contained in the composite structure are layered on each other either directly, e.g., the B-side of the textile layer contacts the A-side of any additional layer without any material such as an adhesive disposed between them, or indirectly, i.e., having layer(s) or an adhesive disposed between them. The cover layer may optionally be coated with a lacquer layer. The composite structure is a layer structure itself. The B-side of the composite structure may contain any additional structure, such as a foam layer or a textile layer or any other layer or functional structure. For instance, an additional foam layer may consist of or contain PVC and meet the requirements set forth below for the foam layer of the cover layer.

Herein, the terms "the composite structure", "the textile layer", and "the cover layer" refer to "the composite structure according to the present invention", "the textile layer contained in the composite structure according to the present invention", and "the cover layer contained in the composite structure of the present invention", respectively, unless explicitly stated otherwise.

The composite structure is preferably flexible and elastic and can preferably be folded reversibly, i.e., folded from an original state and then unfolded to its original state. Preferably, the composite structure can be folded to form a double-layer structure, in which two B-sides of the composite structure are layered on each other and contact each other at the folding edge, and the double-layer structure can be unfolded to its original state. Preferably, the composite structure, in particular the folding edge, shows no visible damage or change after folding and unfolding. The visible damage or change mentioned herein may be measured at room temperature in accordance with the criteria described in DIN 53 351.

Preferably, the composite structure is suitable for preparing a sewn product obtainable by sewing at least two composite structures or two parts of the same composite structure. The sewn product may be prepared by folding the composite structure, placing two B-side parts of the composite structure together to form a contact area and sewing the two parts of the composite structure in the contact area. For the composite structure to have the desired properties, e.g. easy processability when sewing, the composite structure must not be too hard. The Shore A hardness of the composite structure is therefore preferably less than 90 and more preferably less than 50. For suitability for sewing, it is also important that the composite structure has a suitable stitch tear-out force. This is preferably at least 40 N according to DIN EN ISO 23910. In one embodiment, the composite structure is both suitable as a tearable coating for an airbag cover without a material weakening and suitable for preparing a sewn product obtainable by sewing at least two layers of the composite structure. The composite structure is flexible and preferably shows no damages and changes after 100,000 flexing cycles, more preferably after 1,000,000 flexing cycles in a test according to DIN 53 351.

The composite structure may be produced through a coating process. The coating may be applied using a PVC plastisol, i.e., a dispersion of PVC particles in a liquid plasticizer resulting in a fluid paste. When heated, the PVC particles dissolve and the mixture turns into a gel of high viscosity. On cooling, a flexible and permanently plasticized solid product results. The coating may be applied by fluid paste deposition, using a fluid paste prepared beforehand and supported by silicone paper, in a continuous form. The cover layer may be prepared through layer-by-layer deposition of each of the layers using a knife coating technique. In an embodiment, the cover layer is prepared through the sequential coating or adhesion of each of the layers, wherein each of the PVC plastisol was cured before the deposition of the subsequent layer. In particular, the PVC compact layer was cured at a temperature between 177-204 °C, preferably 188-199 °C. Before the PVC adhesive layer is totally cured, the textile is deposited over this layer. The PVC adhesive layer was cured at a temperature between 171-199 °C.

The composite structure may contain an additive such as a filler, plasticizer, a flame retardant, a color pigment, a stabilizer, a lubricant, an ultraviolet absorber, a light stabilizer, an antioxidant, an antibacterial agent, and a foaming agent, if necessary. The additive may be independently contained in the textile layer and/or the cover layer. The foaming agent may be either chemical or physical.

In embodiments, the PVC may contain and additive such as a plasticizer, a flame retardant, and/or a filler described in the following.

A plasticizer may be contained in the PVC of the textile layer and/or the PVC of the cover layer to adjust the properties of the layer and is selected independently for the textile layer and the cover layer. The addition of plasticizers confers properties such as yielding and softness. For example, PVC without plasticiser can have an elongation at break/tensile strength at break of 10 to 50 %, while PVC can have an elongation at break/tensile strength at break of 170 to 400 %, depending on the structure and quantity of plasticizer. The amount of plasticizer is preferably 20 to 60 % based on the total amount of PVC in the textile layer or cover layer, respectively. Phthalate-based plasticizers impart resistance to water and oils, and examples are bis(2-propylheptyl) phthalate (DPHP), diisodecyl phthalate (DIDP), diisoundecyl phthalate (DIUP), ditridecyl phthalate (DTDP), bis(2-ethylhexyl)terephthalate (DEHT, Dioctyl terephthalate, DOTP), Diisopentyl terephthalate (DiPT), dibutyl terephthalate (DBT). Trimellitates impart resistance to high temperature and are commonly used in automobile interiors, and examples are (TOTM, Trioctyl Trimellitate plasticizer), tri-(isononyl)trimellitate (TINTM), tri-(isodecyl)trimellitate (TIDTM), and tri-(isotridecyl)trimellitate (TITDTM). Adipate-based plasticizers impart low-temperature or resistance to ultraviolet light, and an example is bis(2-ethylhexyl)adipate (DEHA, dioctyl adipate plasticizer). Sebacate-based plasticizers impart superior properties at low temperatures, and good oil resistivity, and examples are dibutyl sebacate (DBS), di-(2-ethylhexyl)sebacate, and di-octyl Sebacate (or DOS plasticizer). Organophosphates include tricresyl phosphate (TCP), 2-ethylhexyldiphenyl phosphate, and tri-2-ethylhexyl phosphate. Bio-based such as glycerol triacetate (Triacetin) and acetyltributylcitrate or bioplasticizers derived from natural oils may be used. Epoxidized soybean oil may be used as a secondary plasticizer. The plasticizers may be used singly or as a combination of two or more. PVC can be mixed with additives to improve its physical properties, such as toughness and elasticity, and to enhance processability.

The composite structure may contain a filler. Examples include carbonates such as calcium carbonate and magnesium carbonate, layered silicates such as clay, talc and mica, and fly ash balloons, hollow balloons such as talc balloons and glass balloons. The addition of the filler has the effect of improving dimensional stability and heat resistance, reducing the amount of smoke generated during combustion and the amount of toxic gas such as HCl, and reducing costs. The preferable amount of the fillers is 5 to 100 parts by mass, more preferably 25 to 80 parts by mass, based on 100 parts by mass of the PVC.

The composite structure may contain a flame retardant to improve flame retardancy and reduce the amount of smoke generated during combustion and the amount of toxic gas such as HCl. Examples of flame retardants include molybdic acid-based compounds, zinc nitrate compounds, nitrogen-based compounds such as ammonium carbonate and boron nitride, magnesium hydroxide and aluminium hydroxide. The preferable amount of the flame retardant is 5 to 100 parts by mass, preferably 25 to 80 parts by mass, based on 100 parts by mass of the PVC.

The composite structure according to the present invention may be opaque or translucent. Generally, a translucent structure allows the transmittance of more visible light than an opaque structure when light is emitted from the same light source.

The cover layer may be coated with a lacquer layer. The lacquer may be a conventional material. The thickness of the lacquer layer may preferably be 1 to 30 µm, more preferably 3 to 10 µm. If the lacquer layer is not made of PVC, the lacquer layer is preferably very thin, e.g., 1 to 5 µm, to maintain the monomaterial property of the composite structure as much as possible. The lacquer layer is applied directly on top of the cover layer as a finish of the composite structure and a protection against chemical agents, physical damage such as scratches or abrasion, and UV radiation. The lacquer layer can further reduce the surface adhesion. Conventional lacquers used for artificial leather for the interior of vehicles can be employed, such as a lacquer layer based on a silicone-containing aliphatic polyurethane. The lacquer layer usually consists of one or more, preferably up to four, transparent layers of lacquer. Alternatively, the surface coating may be coloured by adding colour pigments.

An adhesive may be used in the present invention to bond layer structures other than the textile layer and the cover layer to each other. The adhesive may be a polyolefinic adhesive, a polyurethane adhesive, an acrylic adhesive, or a hot melt adhesive based on polyurethane (PUR). The adhesive may be used in a thickness of 40 µm.

In the present invention, the terms "comprises," "comprising," "including," and "having," are inclusive and therefore specify the presence of stated features, steps, layers and/or components, but do not preclude the presence or addition of one or more other features, steps, layers, components, and/or groups thereof. The method steps, processes, and operations described herein are not to be construed as necessarily requiring their performance in the particular order discussed or illustrated, unless specifically identified as an order of performance. It is also to be understood that additional steps may be employed.

Whenever it is mentioned in the context of this description that individual compositions or layers are based on or made of a certain material, this should be interpreted as the respective material forming the main constituent of the composition or layer, wherein other constituents may also be present in small quantities. In embodiments, the terms "based on" or "made of" a certain material means a content of more than 50 %, preferably 90 %, and more preferably 95 %.

As used herein, the singular forms "a," "an," and "the" may be intended to include the plural forms as well, unless the context clearly indicates otherwise. For instance, structural elements and components are generally described in the singular form, e.g. "a" component or "containing a" component. Such singular form formulations are meant to include more than one of the indicated component or structural element, unless indicated otherwise.

The term "and/or" includes any and all combinations of one or more of the associated listed items. Percentages (%) of contents of components are percentages by mass (% by mass) unless explicitly indicated otherwise. Likewise, "parts" are parts by mass.

The standards and norms mentioned herein refer to the latest version available at the time this application was filed, unless indicated otherwise.

### Textile layer

The composite structure contains a textile layer. The textile layer preferably has a thickness of 0.1 to 3.0 mm, more preferably 0.1 to 2.0 mm.

Examples of a textile layer are knitted fabrics, woven textiles, non-woven textiles, glass fiber textiles, spunlace, or a spacer fabric. A knitted fabric is a flexible material made by creating an interlocking bundle of yarns or threads, which are produced by spinning raw fibers into long and twisted lengths. The basic constituents of the textile layer, i.e., the filaments, fibers, yarns, threads etc., are herein jointly referred to as fibers. A spacer fabric is a flexible material formed of two surface textile layers held by spacer threads in a defined spacing. The textile layer is not compact and comprises a large volume ratio of hollow spaces that are usually filled with air. The density of the textile layer is preferably 100 to 500 kg/m³, more preferably 100 to 300 kg/m³.

The fibers of the textile may contain or consist of PVC. The fibers may have a core-sheath structure, wherein the core may be any polymer such as a polyester or polyether and the sheath may cover the core and may be a material containing or consisting of PVC. The content of PVC in the fibers is preferably at least 50 parts by mass, more preferably at least 90 parts by mass based on 100 parts by mass of all polymers contained in the fibers. The absolute content of PVC in the fibers is preferably at least 40 %, more preferably at least 80 %. The PVC used for the textile layer may contain an additive such as a plasticizer mentioned above. The textile layer affects the properties of the composite structure, e.g. tensile strength, resistance to tear, elongation at break, wrinkle formation, and thermoformability.

### Cover layer

The composite structure contains a cover layer. The cover layer preferably has a thickness of 0.05 mm to 2.0 mm, more preferably 0.1 mm to 1.5 mm.

The cover layer may consist of a single layer or at least two sublayers. Preferably, the sublayers of a cover layer are directly bonded to each other, i.e., the cover layer consists of these sublayers. The cover layer consisting of one layer may be compact or foamed. Hence, the textile layer is in direct contact with a compact layer or a foamed layer. The cover layer containing at least two layers may contain or consist of one or more compact layers and/or one or more foam layers. For instance, the composite structure may contain a textile layer and, as cover layers, a foam layer and a compact layer in this order. The compact layer may be made of two sublayers. The textile layer and the cover layer may be bonded to each other by a thin PVC-containing adhesive to form a structure consisting of the textile layer, the adhesive layer, and the cover layer in this order. In that case, the adhesive is a sublayer of the cover layer and meets the requirements of the cover layer as described herein.

The density of the compact cover layer or a compact sublayer is preferably higher than 800 kg/m³ and more preferably higher than 850 kg/m³. The density of the foam layer or a foam sublayer is preferably lower than 500 kg/m³, more preferably lower than 300 kg/m³.

The cover layer may show elastic properties and/or thermoplastic properties. The thermoplastic property allows thermal bonding of the cover layer to the textile layer without the use of an adhesive. The thermoplastic property requires that the overall degree of crosslinking is not too high. The gel content is preferably 0 % to 20 %. The PVC used for the cover layer may contain an additive such as a plasticizer mentioned above.

The composition of the cover layer preferably differs from the composition of the fibers of the textile layer, e.g. in terms of amount and/or kind of additive such as plasticizer.

The cover layer preferably has a grain, which is a three-dimensionally structured surface on the top side covered with lacquer. The grain may be present in the cover layer only or both in the cover layer and the lacquer layer. In that case the composite structure may be used as an artificial leather. The grain may be introduced by known methods such as embossing or using a release paper having a surface showing a negative of the structure of the desired grain. The depth of the grain is less than the thickness of the cover layer and is preferably 10 to 500 µm, more preferably 50 to 500 µm, still more preferably 50 to 300 µm. The grain can be produced using conventional methods.

## Claims

1. A composite structure containing a textile layer and a cover layer directly bonded to the textile layer, wherein the textile layer and the cover layer contain polyvinyl chloride.

2. The composite structure according to claim 1, wherein the textile layer contains fibers containing or consisting of polyvinyl chloride.

3. The composite structure according to any of the preceding claims, wherein the textile layer contains coated fibers, wherein the coating of the fibers contains or consists of polyvinyl chloride.

4. The composite structure according to any of the preceding claims, wherein the content of polymers other than polyvinyl chloride in the textile layer is less than 10 parts by mass based on the total content of polymers of 100 parts by mass in the textile layer, and wherein the content of polymers other than polyvinyl chloride in the cover layer is less than 10 parts by mass based on the total content of polymers of 100 parts by mass in the cover layer.

5. The composite structure according to any of the preceding claims, wherein the textile layer has a thickness of 0.1 to 3.0 mm, and the cover layer has a thickness of 0.05 mm to 2.0 mm.

6. The composite structure according to any of the preceding claims, wherein the cover layer contains or consists of a compact layer directly bonded to the textile layer, or wherein the cover layer contains or consists of a foam layer directly bonded to the textile layer.

7. The composite structure according to claim 6, wherein the cover layer contains at least two sublayers.

8. The composite structure according to any of the preceding claims, wherein the adhesion strength of the textile layer to the cover layer is at least 20 N in a measurement according to ISO 2411.

9. The composite structure according to claim 7 or 8, wherein the textile layer has a thickness of 0.1 to 3.0 mm and the cover layer has a thickness of 0.1 mm to 2.0 mm,

10. The composite structure according to any of the preceding claims, wherein the composite structure is an artificial leather.

11. A method of preparing a composite structure as described in any of claims 1 to 10, comprising thermally or thermo-mechanically bonding the cover layer and the textile layer.

12. A sewn product obtainable by sewing the composite structure according to any of claims 1 to 10.

13. A method of preparing a sewn product comprising sewing a composite structure according to any of claims 1 to 9.

14. The composite structure according to any of claims 1 to 10 or the sewn product according to claim 12, which is a surface material in the interior of a vehicle.

15. The use of a composite structure according to any of claims 1 to 10 or a sewn product according to claim 12 as a surface material in the interior of a vehicle.
